Europäisches Patentamt

European Patent Office

Office européen des brevets

(19)

(11) Publication number: **0 259 971**
**A1**

## EUROPEAN PATENT APPLICATION

(12)

(21) Application number: **87306925.6**

(22) Date of filing: **05.08.87**

(51) Int. Cl.⁴: **G06F 15/72**

(30) Priority: **14.08.86 US 896920**

(43) Date of publication of application:
**16.03.88 Bulletin 88/11**

(84) Designated Contracting States:
**DE ES FR GB SE**

(71) Applicant: **AMERICAN TELEPHONE AND
TELEGRAPH COMPANY
550 Madison Avenue
New York, NY 10022(US)**

(72) Inventor: **Bishop, Thomas Gary
108 Hartshorne Road
Locust New Jersey 07760(US)**

(74) Representative: **Buckley, Christopher Simon
Thirsk et al
Western Electric Company Limited 5
Mornington Road
Woodford Green Essex IG8 OTU(GB)**

(54) **Fast phong shading.**

(57) A method and apparatus for efficiently determining shading intensities for objects defined by a plurality of polygons that are to be displayed in two dimensions. Shading intensities are developed by employing the vertex normals of the polygons and interpolating the normals for the pixels within the polygons through a power series approximation. In accordance with one aspect of the invention, a two dimensional Taylor series approximation is employed (110, 120) to obtain intensity values. An interpolator (100) develops vector parameters for each polygon (100-140), and subsequent processors (150,160) evaluate the intensity of each pixel by applying the vector parameters to the pixel coordinates.

FIG. 1

## FAST PHONG SHADING

Background of the Invention

This invention is related to computer graphics, and more particularly to the art of displaying three dimensional objects on a two dimension screen with is capable of displaying variable intensity pixels.

Most computer image generation systems represent curved surfaces as a mesh of planar polygons, because polygons can be transformed and rendered quickly with well known algorithms. Since the polygon representation is an artifact of the image generation method and is usually of no interest to viewers, these systems attempt to restore a smooth appearance to surfaces by varying the displayed light intensity across the polygons. This is commonly referred to as shading. The efficiency of the shading operation is critical to the performance of a computer image generation system because it must be performed for one million or more pixels per image. Although algorithms for realistic shadings of polygons are well known, real-time systems have not used them because of the large amount of computation they require per pixel.

Polygons can always be decomposed into a plurality of triangles, and therefore surfaces can be approximated with a collection of triangles that are interconnected at edges and vertices. At least three triangles must meet at each vertex. By algebraically combining the slopes of the different surfaces that meet at each vertex, a vector may be computed that very closely approximates the normal to the surface of the rendered object at the location of the vertex. Most prior art computer image generation systems employ these vectors (one for each vertex) as the input set for the curved surface from which shading intensities are computed.

Thus, given an input that consists of triangles with normals, $\vec{N}$, to the original curved surface specified at each vertex (of the triangle), the shading algorithm must determine the intensity of each point in each triangle from the surface normals, and from the vector describing the light source $\vec{L}$. In many realizations the light source is assumed to be at infinity, making $\vec{L}$ (particularly, its direction) independent of the point on the object upon which the light shines.

The light which is reflected from the object and reaches the eye is often thought of comprising three parts: an ambient component, a diffuse component, and a specular component. The ambient component accounts for reflections from the object that are due to ambient light sources. The diffuse component accounts for light reflections from the light source $\vec{L}$, which are reflected from each point on the relatively coarse surface of the object. The specular component accounts for the sheen that appears on very smooth objects. The specular component is pronounced only on very smooth surfaces as, for example, where a glass sphere (e.g., marble, or a light fixture) in a room reflects the window from where the light enters the room.

Most algorithms handle only the diffuse components because it provides the greatest enhancement to shading. Diffuse reflection is generally defined as

$$I_{diffuse} = \frac{\vec{L} \cdot \vec{N}}{|\vec{L}| \; |\vec{N}|} \qquad (1)$$

or, if the computations are normalized with respect to $\vec{L}$, as

$$I_{diffuse} = \frac{\vec{L} \cdot \vec{N}}{\vec{N}}. \qquad (2)$$

The most commonly used shading method in real-time systems, known as Gouraud shading, computes the intensity at each point by a linear interpolation of the intensities at the vertices. It was first described by H. Gouraud in "Continuous Shading of Curved Surfaces." IEEE Transactions on Computers, June 1971, Vol.20, No.6, pp. 623-628. These intensities, which are scalar values, are determined by using the above illumination equation (1) with the normals given at the vertices. The reason why the Gouraud method is often used in real-time systems is because it produces images of acceptable quality with only one addition per pixel. However, the resultant shading has several disturbing characteristics; specifically, moving objects tend to "flatten out" at certain viewing angles, surfaces often appear dull or chalky, and images show pronounced artifacts known as Mach bands (which are exaggerations of intensity changes at discontinuities).

Phong shading is a more complex procedure. It eliminates "flattening out" and dull surfaces, and reduces Mach bands; but it requires a large amount of computation in its usual formulation. Phong's method, described in Illumination for Computer-Generated Images, a Ph.D Dissertation, Department of Computer Science, University of Utah, July 1973, determines the intensity of each point using an approximation to the surface normal that is a linear interpolation between surface normals specified at the vertices. That is, rather than interpolating the scalar values of Gouraud, Phong's method interpolates the vectors. In terms of the x and y screen coordinates, the normal vector $\vec{N}$ can be defined as

$$\vec{N}(x,y) = \vec{A}x + \vec{B}y + \vec{C} \qquad (3)$$

where $\vec{A}$, $\vec{B}$, and $\vec{C}$ are chosen to interpolate the normal across the polygon. The $\vec{A}$, $\vec{B}$, and $\vec{C}$ are chosen so that at one vertex, $\alpha$, of the triangle under consideration $\vec{A}x_\alpha + \vec{B}y_\alpha + \vec{C} = \vec{N}_\alpha$, at a second vertex, $\beta$, of the triangle $\vec{A}x_\beta + \vec{B}y_\beta + \vec{C} = \vec{N}_\beta$, and at the third vertex, $\gamma$, of the triangle $\vec{A}x_\gamma + \vec{B}y_\gamma + \vec{C} = \vec{N}_\gamma$.

Interpolating Phong's model for successive values of x and y and evaluating the illumination model requires seven additions, six multiplications, one division, and one square root per pixel. That is a substantial computational load.

T. Duff, in "Smoothly Shaded Renderings of Polyhedral Objects on Raster Displays," ACM Computer Graphics, Vol.13, No. 2, pp. 270-275, has shown that Phong shading can be implemented more efficiently by combining the interpolation and illumination equations; to wit, by evaluating

$$I_{diffuse}(x,y) = \vec{L} \cdot \frac{\vec{A}x + \vec{B}y + \vec{C}}{|\vec{A}x + \vec{B}y + \vec{C}|} \qquad (4)$$

which can be written as

$$I_{diffuse}(x,y) = \frac{\vec{L}\cdot\vec{A}x + \vec{L}\cdot\vec{B}y + \vec{L}\cdot\vec{C}}{|\vec{A}x + \vec{B}y + \vec{C}|} \qquad . \qquad (5)$$

Performing the indicated vector dot products and expanding the vector magnitude yields

$$I_{diffuse} = \frac{ax + by + c}{\left[dx^2 + exy + fy^2 + gx + hy + i\right]^{1/2}} \qquad (6)$$

where
$$a = \vec{L}\cdot\vec{A}; \quad b = \vec{L}\cdot\vec{B}; \quad c = \vec{L}\cdot\vec{C};$$
$$d = \vec{A}\cdot\vec{A}; \quad e = 2\vec{A}\cdot\vec{B}; \quad f = \vec{B}\cdot\vec{B};$$
$$g = 2\vec{A}\cdot\vec{C}; \quad h = 2\vec{B}\cdot\vec{C}; \quad \text{and} \quad i = \vec{C}\cdot\vec{C} \quad .$$

Although the above equation has a larger number of terms, it deals only with scalars and it, therefore, represents a substantial savings over Phong's formulation. However, the division and square root operations are still an obstacle to real-time use.

It is an object of this invention to provide a method and apparatus for performing shading of three dimensional objects on a two dimensional screen more effectively and expeditiously than has heretofore been possible.

## Brief Description of the Drawing

FIG. 1 presents an illustrative embodiment of apparatus for developing pixel intensity information to permit a shaded display of three dimensional objects on a two dimensional screen;

FIG. 2 illustrates a triangle with normal vectors at its vertices, which is part of a set of triangles that combine to define the displayed object;

FIG. 3 presents a block diagram of a DDA Diffuse Processor employed in the apparatus of FIG. 1;

FIG. 4 presents a block diagram of block 160 in FIG. 1; and

FIG. 5 depicts a video work station that incorporates the principles of my invention.

## Summary of the Invention

Efficient processing of information that defines objects to be displayed is achieved by employing the polygons defining the objects and, more particularly, by employing the vertex normals of the polygons. Pixel intensities are developed by evaluating a power series approximation for the reflection coefficients of the pixels within the polygons.

In accordance with one aspect of the invention, a two dimensional Taylor series approximation is employed to obtain intensity values with the use of a normal interpolator that develops vector parameters for each polygon and evaluates the intensity of each pixel by applying the vector parameters to the pixel coordinates.

## Detailed Description

Rather than evaluating Duff's equation exactly, I merely approximate the intensity between vertices and, in accordance with one aspect of my invention, I approximate Duff's equation with a two dimensional Taylor's series having the general form

$$f(a+h,\ b+k) = f(a,b) + \sum_{i=1}^{\infty} \frac{1}{i!} \partial^{i}(f(a,b)) \qquad (7)$$

where

$$\partial = \left( h\frac{\partial}{\partial x} + k\frac{\partial}{\partial y} \right)$$

Shifting the triangle appearing at the screen so that (0,0) lies at its centre and expanding equation (6) in a Taylor series to the second degree results in:

$$I_{diffuse} = T_0 + T_1 y + T_2 x + T_3 y^2 + T_4 xy + T_5 x^2$$

with 

$$T_0 = \frac{c}{\sqrt{i}}$$

$$T_1 = \frac{2bi - ch}{2i\sqrt{i}}$$

$$T_2 = \frac{2ai - cg}{2i\sqrt{i}}$$

$$T_3 = \frac{3ch^2 - 4cfi - 4bhi}{8i^2\sqrt{i}}$$

$$T_4 = \frac{3cgh - 2cei - 2bgi - 2ahi}{4i^2\sqrt{i}}$$

and 

$$T_5 = \frac{3ig^2 - 4cdi - 4agi}{8i^2\sqrt{i}}. \tag{8}$$

The specular reflection component can easily be included in the above expansion. This component is generally defined by

$$I_{specular} = \left(\vec{N} \cdot \vec{H}\right)^n \tag{9}$$

and it may be evaluated by using Taylor's series to develop the above dot product, and by using a look-up table to do the exponentiation. The vector $\vec{H}$ is a vector in the direction of maximum highlight, which is halfway between the light direction, $\vec{L}$ and the eye direction, $\vec{E}$; i.e.,

$$\vec{H} = \frac{\vec{E} + \vec{L}}{|\vec{E} + \vec{L}|} \tag{10}$$

The eye, like the light source, is taken to be at an infinity for the purposes of equation 10. With my simplifications, the total illumination reflected from the body, $I = I_{ambient} + I_{diffuse} + I_{specular}$, can be evaluated with only five additions and one memory access per pixel.

Since, in accordance with my invention, the form of the polynomial that needs to be evaluated at each pixel is independent of the original illumination equation, more elaborate models can be used. One useful extension is to provide for finite eye distance from the object, thus requiring that the vector direction to the eye, $\vec{E}$, vary across the scene. The resulting variation in the specular component results in much more natural looking illumination for scenes rendered with perspective. This is most obvious when there are planar surfaces in the scene because Phong shading with the eye at infinity, like flat shading, renders all parallel surfaces with the same intensity. The illumination equation for the specular component with the eye at a finite distance is

$$I_{specular}(x,y) = \frac{\vec{N}(x,y) \cdot \vec{H}(x,y)}{|\vec{N}(x,y)|\,|\vec{H}(x,y)|}, \tag{11}$$

where $\vec{H}(x,y) = \vec{E}(x,y) + \vec{L}$ and $\vec{E}(x,y)$ interpolates the eye vector across the triangle. This can be expanded just as before with

$$I_{specular}(x,y) = \frac{(\vec{A}x + \vec{B}y + \vec{C}) \cdot (\vec{D}x + \vec{F}y + \vec{G})}{|(\vec{A}x + \vec{B}y + \vec{C})|\,|(\vec{D}x + \vec{F}y + \vec{G})|} \tag{12}$$

After performing the dot products and expanding the vector magnitude as before,

$$I_{specular}(x,y) = \frac{ax^2 + bxy + cy^2 + dx + ey + f}{\sqrt{(M)(N)}} \qquad (13)$$

with

$$M = (gx^2 + hxy + iy^2 + jx + ky + l);$$
$$N = (mx^2 + nxy + oy^2 + px + qy + r);$$
$$a = \vec{A} \cdot \vec{D}; \quad b = \vec{A} \cdot \vec{F} + \vec{B} \cdot \vec{D}; \quad c = \vec{B} \cdot \vec{F};$$
$$d = \vec{A} \cdot \vec{G} + \vec{C} \cdot \vec{D}; \quad e = \vec{B} \cdot \vec{G} + \vec{C} \cdot \vec{F}; \quad f = \vec{C} \cdot \vec{G};$$
$$g = \vec{A} \cdot \vec{A}; \quad h = 2\vec{A} \cdot \vec{B}; \quad i = \vec{B} \cdot \vec{B};$$
$$j = 2\vec{A} \cdot \vec{C}; \quad k = 2\vec{B} \cdot \vec{C}; \quad l = \vec{C} \cdot \vec{C};$$
$$m = \vec{F} \cdot \vec{F}; \quad n = \vec{D} \cdot \vec{D}; \quad o = 2\vec{D} \cdot \vec{F};$$
$$p = 2\vec{D} \cdot \vec{G}; \quad q = 2\vec{F} \cdot \vec{G}; \quad r = \vec{G} \cdot \vec{G}.$$

Then, expanding in Taylor's series about (0,0) results in:

$$I_{specular}(x,y) = T_5 x^2 + T_4 xy + T_3 y^2 + T_2 x + T_1 y + T_0 \qquad (14)$$

with

$$T_5 = \frac{8al^2r^2 - 4djlr^2 - 4fglr^2 + 3fj^2r^2 - 4dl^2pr + 2fjlpr - 4fl^2mr + 3fl^2p^2}{8l^2r^2\sqrt{lr}},$$

$$T_4 = T_{40} + T_{41},$$

$$T_{40} = \frac{4bl^2r^2 - 2dklr^2 - 2ejlr^2 - 2fhlr^2 + 3fjkr^2}{4l^2r^2\sqrt{lr}},$$

$$T_{41} = \frac{-2dl^2qr - fjlqr - 2el^2pr + fklpr - 2fl^2nr + 3fl^2pq}{4l^2r^2\sqrt{lr}},$$

$$T_3 = \frac{8cl^2r^2 - 4eklr^2 - 4filr^2 + 3fk^2r^2 - 4el^2qr + 2fklqr - 4fl^2or + 3fl^2q^2}{8l^2r^2\sqrt{lr}},$$

$$T_2 = \frac{2dlr - fjr - flp}{2lr\sqrt{lr}},$$

$$T_1 = \frac{2elr - fkr - flq}{2lr\sqrt{lr}}, \text{ and}$$

$$T_0 = \frac{f}{\sqrt{lr}}.$$

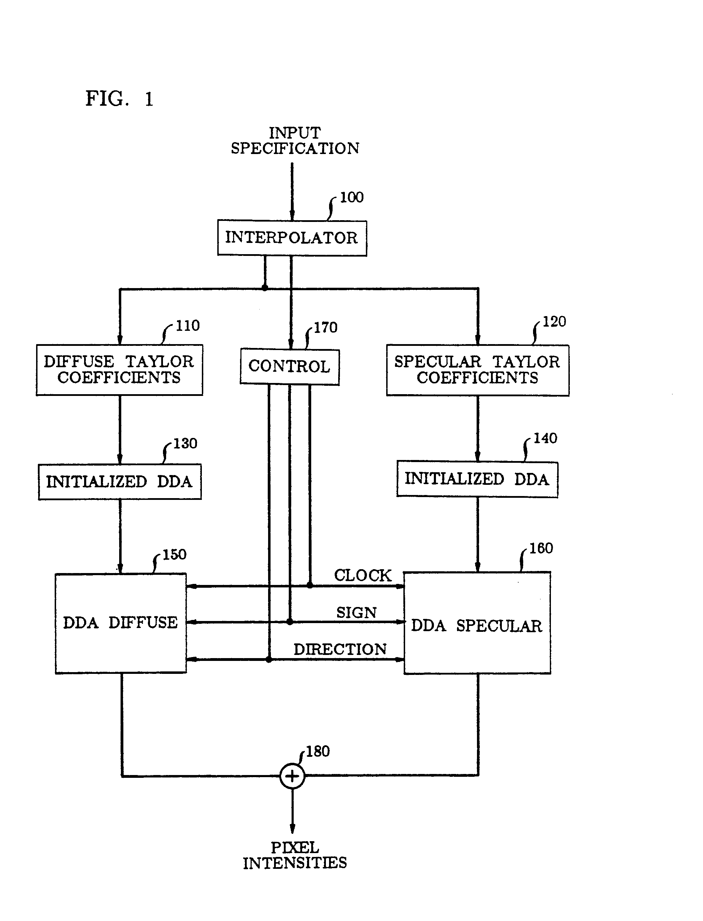

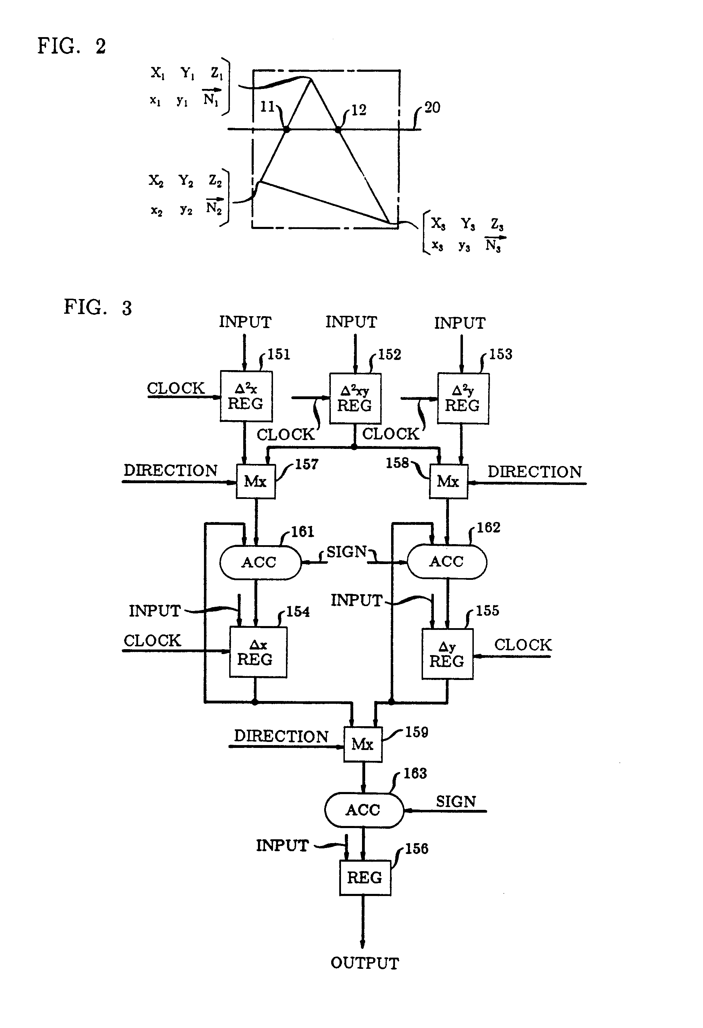

FIG. 1 depicts one embodiment for realizing the advantages of my invention. It implements a shading process that includes a specular component and accounts for eye positions at other than infinity. Before proceeding with a description of the FIG. 1 system, however, it may be useful to address FIG. 2 which depicts a triangle 10 that is to be displayed and appropriately shaded on a computer screen. Triangle 10 has three vertices at coordinates $X_1, Y_1, Z_1, X_2, Y_2, Z_2$, and $X_3, Y_3, Z_3$ in the three dimensional space, and coordinates $x_1, y_1, x_2, y_2$, and $x_3, y_3$ in the two dimensional screen coordinates. In addition, each of the vertices (i), has an associated normal vector $\vec{N_i}$ which specifies the direction that is perpendicular to the surface of the object that is, in part, approximated by the triangle at hand. The conversion from three dimensional coordinates to the two dimensional screen coordinates is well known and may be obtained by conventional means. Indeed, for purposes of this disclosure, it is assumed that a triangle is already defined in the screen coordinates and that the object to be displayed and shaded is specified through a plurality of coordinate sets, each defining a triangle. (It is understood, of course, that a higher order polygon can be defined without departing from the principles of this invention.)

Since each pixel on the triangle edge and within the triangle must be shaded, one must evaluate a normal vector for each and every pixel subsumed by the triangle and derive an intensity value based on that normal. This can be done by considering the triangle as a whole, or by considering the scan lines that would combine to draw the triangle. In accordance with the latter method, horizontal lines traverse the triangle, and if I compute the normal at each edge point (e.g., at points 11 and 12 along scan line 20) then I can interpolate between the two vectors and obtain a vector direction for each pixel in between. When considering the entire triangle, on the other hand, the equation for the normal, expressed by equation 3, can be employed to compute the vector parameters ($\vec{A}$, $\vec{B}$, and $\vec{C}$) that characterize the normal at each and every point within the triangle and, from those parameters, the intensities may be computed as described above.

With FIG. 2 in mind and proceeding to FIG. 1, block 100 is the vector interpolator that develops the vector parameters $\vec{A}$, $\vec{B}$, and $\vec{C}$ of the triangle. Since depicted objects comprise a large number of the triangles, it is to be understood, of course, that block 100 receives a large plurality of triangle defining parameter sets, and it operates on those sets seriatim.

The computation of vector parameters $\vec{A}$, $\vec{B}$, and $\vec{C}$ may be carried out in a conventional manner in any processor that is able to perform multiplications and subtractions (solving three equations and three unknowns).

The output of interpolator 100 is applied to block 110, wherein the diffuse coefficients $T_0$ -$T_5$ of equation (8), are computed, and to block 120, wherein the specular coefficients $T_0$ -$T_5$ of equation (14) are computed. These computations involve, at most, a vector dot product and $1\sqrt{x}$ which can easily be implemented with any hardware that is capable of carrying out multiplications and additions.

The $T_0$ -$T_5$ coefficients of blocks 110 and 120 are applied to initialization blocks 130 and 140, respectively, where a process intialization takes place. This process of initialization is performed only once for each polygon and, therefore, its computational burden on system performance is relatively small. To compute intensities of each of the pixels in the triangle under consideration, for the illustrative purposes of this disclosure, the FIG. 1 system employs still another approach for an algorithmic processing of the pixels. An imaginary box is constructed within which the triangle sits. Its dimensions are dictated by the size and orientation of the triangle (in FIG. 2 the box is bounded by $x_2 y_1$ and $x_3, y_3$), and the algorithm systematically processes every pixel in the box. I start with the pixel in the upper left-hand corner and decide whether it is within or outside the triangle. This decision is easily derived in control block 170 in FIG. 1 from the definitional equation of the triangle under consideration (obtained from the input to inerpolator 100, or from interpolator 100). If the pixel is determined to be outside the triangle, the scan coordinates are advanced in the +x direction (to the right) to select the next pixel. When the pixel is determined to be within the triangle, I write into display memory 210 the intensity value resulting from the processing described below. At the right edge of the box, I move down one pixel and henceforth advance in the -x direction (to the left). At the left edge of the box, I step down again and resume movement in the +x direction. In this zig-zag fashion, each and every pixel in the box is considered and, hence, each and every pixel in the triangle is provessed.

In accordance with the above, blocks 130 and 140 initialize the process by computing (only once for each triangle) the values

$$2T_5,$$

$$2T_3,$$

$$2T_5 x_{init} + T_4 y_{init} + T_5 + T_2,$$

$$2T_3 y_{init} + T_4 x_{init} + T_3 + T_1,$$

and $\quad T_5 x_{init}^2 + T_4 x_{init} y_{init} + T_3 y_{init}^2 + T_2 x_{init} + T_1 y_{init} + T_0 .$

Those values are communicated to the modules that follow, which are block 150 connected to block 130, and block 160 connected to block 140.

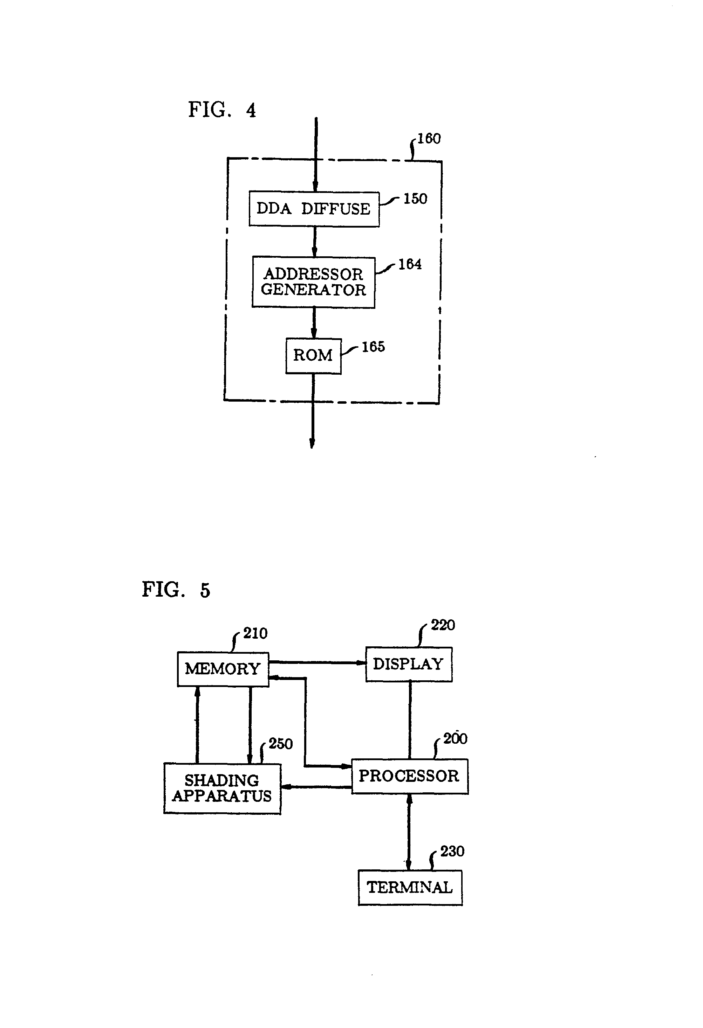

Blocks 150 and 160 compute the $I$ *diffuse* and $I_{specular}$ intensities. A diagram of block 150 is presented in FIG. 3, and a diagram of block 160 is presented in FIG. 4.

The block diagram of FIG. 3, which I call the DDA Diffuse Processor, depicts six registers and a number of accumulators and multiplexer switches. Register 151, the $\Delta^2 x$ register, receives the $2T_5$ signal from block 130; register 152, the $\Delta^2 xy$ register, receives the signal $T_4$ from block 130 (unaltered from block 110); register 153, the $\Delta^2 y$ register, receives the $2T_3$ signal from block 130; register 154, the $\Delta x$ register, receives the $2T_5 x_{init} + T_4 y_{init} + T_5 + T_2$, signal from block 130; register 155, the $\Delta y$ register, receives the $2 T_3 y_{init} + T_4 x_{init} + T_3 + T_1$, signal from block 130; and register 156, the ouput register, receives the

$$T_5 x_{init}^2 + T_4 x_{init} y_{init} + T_3 y_{init}^2 + T_2 x_{init} + T_1 y_{init} + T_0$$

signal from block 130. The output signal of register 151 is applied to a multiplexer switch 157, the output signal of register 153 is applied to a multiplexer switch 158, and the output signal of register 152 is applied to both multiplexer switches 157 and 158. Multiplexers 157 and 158 are controlled by signal "*direction*". The output of multiplexer 157 is applied to accumulator 161, to which is also connected the output of register 154. Similarly, the output of multiplexer 158 is applied to accumulator 162, to which is also connected the output of register 155. Accumulators 161 and 162 store their results in registers 154 and 155 respectively. The outputs of registers 154 and 155 are applied to multiplexer 159 which is controller by the signal "*direction* ", and the output of multiplexer 159 is connected to accumulator 163. Accumulator 163, which like accumulators 161 and 162 is capable of subtracting as well as adding under control of signal "*sign*", applies its accumulated output to register 156. Register 156 feeds back its contents to accumulator 163 and also offers its contents as the output of block 150. This output is the desired intensity scalar for each and every pixel within the triangle.

Block 160 of FIG. 4 includes a DDA Diffuse Processor (identical to the one illustrated in FIG. 3) and two post processing modules that perform the necessary exponentiation of equation (9). This includes an address generation block 164 and an exponentiation ROM look-up table 165. In many applications, block 164 may simply be a means for dropping a chosen number of low order bits from the result of the DDA Diffuse Processor. ROM 165 is also conventional.

The output of modules 150 and 160 are, lastly, combined in adder 180 to develop the signal intensities of the pixels, corresponding to $I_{diffuse} + I_{specular}$. Of course, the $I_{ambient}$ is most often considered to be a constant that may, or may not be added at adder 180 or added to the initialization of block 156 in DDA diffused processor 150.

As indicated above, control block 170 affects the operation of blocks 150 and 160. It provides to these blocks a clock signal, the "*direction*" signal, and the "*sign*" signal. The "*direction*" signal identifies whether the movement is in the x direction or in the y direction, while the "*sign*" signal identifies whether the movement is in the + (x or y) or - (x or y) directions. The clock signal controls the instances when the computations advance. That is, the clock cycles at every step (advancing from pixel to pixel). Control of the "*direction*" and "*sign*" signals is through counters which are preset to the size of the box subsuming the triangle.

The apparatus of FIG. 1 can be incorporated in a high quality video work station to be used by equipment designers, testers, illustrators, and the like. Such a work station, depicted in FIG. 5, typically comprises a processor 200, a memory 210, a display 220, and an input device 230 for the user's interaction with the system. A segment of memory 210 is typically devoted to storing the screen display information, and circuitry is provided for refreshing the screen display by repeatedly reading the screen display memory segment.

In accordance with my invention shading apparatus 250 (such as the one illustrated in FIG.1 and described above) is included in such a work station and arranged to interact with processor 200 and memory 210. Processor 200 supplies the plurality of triangle coordinate and normal vectors sets to apparatus 250, and apparatus 250 supplies pixel intensity information to the screen display segment of memory 210.

From the above observations and derivations, and a description of the apparatus embodying the principles of my invention, the method of my invention can be summarized to comprise an ordered sequence of steps that evaluates the intensity desired for each pixel within each of a plurality of polygons defined by given sets of coordinate values and normal vectors at the vertices of the polygons. The normal vectors for each polynomial are combined to develop a set of relationships that define the intensity of each pixel within the polygon through an interpolative process, and a power series approximation is applied to this set of relationships. This results in a collection of intensity values that are applied to the display medium for storage, display, or other manipulations.

The above description presents the method, details one embodiment, and suggests a number of alternate implementations of my invention. These, of course, should be construed as illustrative examples and not as limitations. Indeed, many other implementations could suggest themselves to those skilled in the art which would not depart from the spirit and scope of my invention. For example, the FIG. 1 implementation develops intensity values for a pixel by augmenting the intensity value computed for an adjacent pixel. A different embodiment could, for example, develop a power series approximation to the equation that determines intensity from the absolute coordinates of the pixel (e.g., equation 8). Still another embodiment can select a higher order polynomial approximation that may or may not be a Taylor series expansion. Still another embodiment can evaluate all of the required computations within processor 200 (of FIG. 5), in a single pipelined processor, or in an array of digital signal processors. The latter two embodiments yield extremely fast operation, which is valuable in large high resolution work stations.

## Claims

1. Apparatus for developing intensity signals for displaying objects described in two dimensions CHARACTERIZED BY

first means responsive to input signals identifying coordinates of segments of said objects and normal vectors at vertices of said segments, for developing interpolation vector parameters;

second means responsive to said first means for developing power series coefficients from said interpolation vector parameters; and

third means responsive to said second means for combining said power series coefficients to develop intensity signals.

2. Apparatus of claim 1,
CHARACTERIZED IN THAT
said first means comprises
a memory;
a processor for interacting with said memory and causing said memory to contain information describing said object;
means responsive to said information for developing sets of coordinate points on said object and normal vectors at said coordinate points;
interpolator means responsive to sets of coordinate points and to said normal vectors for developing interpolation vector parameters; and further comprises means responsive to said third means for placing said intensity signals in said memory.

3. The apparatus of claim 1
CHARACTERIZED IN THAT
said third means includes means for developing intensity signals corresponding to diffuse reflections.

4. The apparatus of claim 1
CHARACTERIZED IN THAT
said third means includes means for developing intensity signals corresponding to diffuse reflections and specular reflections.

5. The apparatus of claim 1
CHARACTERIZED IN THAT
said power series coefficients correspond to Taylor series coefficients approximating said interpolation vector parameters.

6. A method for developing intensity signals for displaying objects described in two dimensions in terms of polygons.
CHARACTERIZED BY
combining coordinate values and normal vectors at the vertices of the polygons to develop a set of relationships defining the intensity of each pixel within each of said polygons;
developing a power series approximation to said set of relationships; and evaluating said intensity signals in accordance with said power series.

FIG. 1

INPUT
SPECIFICATION

100

INTERPOLATOR

110

DIFFUSE TAYLOR
COEFFICIENTS

170

CONTROL

120

SPECULAR TAYLOR
COEFFICIENTS

130

INITIALIZED DDA

140

INITIALIZED DDA

150

DDA DIFFUSE

CLOCK

SIGN

DIRECTION

160

DDA SPECULAR

180

$\oplus$

PIXEL
INTENSITIES

FIG. 2

$$X_1 \quad Y_1 \quad Z_1$$
$$x_1 \quad y_1 \quad \overrightarrow{N_1}$$

11    12    20

$$X_2 \quad Y_2 \quad Z_2$$
$$x_2 \quad y_2 \quad \overrightarrow{N_2}$$

$$X_3 \quad Y_3 \quad Z_3$$
$$x_3 \quad y_3 \quad \overrightarrow{N_3}$$

FIG. 3

INPUT    INPUT    INPUT

CLOCK   $\Delta^2 x$ REG 151   $\Delta^2 xy$ REG 152   $\Delta^2 y$ REG 153

CLOCK   CLOCK

DIRECTION   Mx 157   158   Mx   DIRECTION

ACC 161   SIGN   ACC 162

INPUT   INPUT

CLOCK   $\Delta x$ REG 154   $\Delta y$ REG 155   CLOCK

DIRECTION   Mx 159

ACC 163   SIGN

INPUT   REG 156

OUTPUT

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | SPRING COMPCON 82, DIGEST OF PAPERS, San Francisco, California, 22nd-25th February 1982, pages 245-250, IEEE, New York, US; T. WHITTED: "Processing requirements for hidden surface elimination and realistic shading" * Page 247, left-hand column, line 12 - page 250, line 8 * --- | 1-4,6 | G 06 F 15/72 |
| A | COMPUTER GRAPHICS AND IMAGE PROCESSING, vol. 17, no. 3, pages 249-261, Academic Press, Inc., New York, US; D.H. BASS: "Using the video lookup table for reflectivity calculations: specific techniques and graphic results" ----- | | |

TECHNICAL FIELDS SEARCHED (Int. Cl.4)

G 06 F 15/72

The present search report has been drawn up for all claims

| Place of search | Date of completion of the search | Examiner |
|---|---|---|
| THE HAGUE | 23-12-1987 | BURGAUD C. |